**Europäisches Patentamt**

**European Patent Office**

**Office européen des brevets**

(11) Numéro de publication : **0 494 802 A1**

(19)

# (12) DEMANDE DE BREVET EUROPEEN

(21) Numéro de dépôt : **92400001.1**

(51) Int. Cl.⁵ : **A01N 63/00,** A01C 1/06

(22) Date de dépôt : **02.01.92**

(30) Priorité : **03.01.91 FR 9100033**

(43) Date de publication de la demande :
**15.07.92 Bulletin 92/29**

(84) Etats contractants désignés :
**AT BE CH DE DK ES FR GB GR IT LI LU NL PT SE**

(71) Demandeur : **PIONEER FRANCE MAIS SA
4 Rue Paul Berniès
F-31075 Toulouse cédex (FR)**

(72) Inventeur : **Paul, François Bernard
69 Chemin Malepere
F-31400 Toulouse (FR)**
Inventeur : **Cholez, Guy Pierre
38 Impasse Maniou
F-31140 Launaguet (FR)**
Inventeur : **Fages, Jacques Marie Louis
Quartier Saguens, Route de Cugnaux
F-31120 Portet-sur-Garonne (FR)**
Inventeur : **Monsan, Pierre Frédéric Emmanuel
Renoufail, Chemin de la Gravette
F-31700 Mondonville (FR)**

(74) Mandataire : **Colas, Jean-Pierre et al
Cabinet de Boisse 37, avenue Franklin D.
Roosevelt
F-75008 Paris (FR)**

(54) **Graines revêtues de préparations déshydratées de microorganismes et leur procédé d'obtention.**

(57)     L'invention concerne un procédé de bactérisation de graines d'une plante cultivée, caractérisé en ce qu'il comprend les étapes consistant à :

a) appliquer sur les graines une solution aqueuse d'un adhésif ;

b) appliquer des particules (i) d'un polysaccharide au moins partiellement polymérisé contenant des cellules déshydratées d'un microorganisme ayant un effet bénéfique sur la croissance de la plante cultivée sur les graines revêtues d'adhésif ;

c) appliquer des particules (ii) d'une charge inerte sur les graines revêtues des particules (i) ;

d) facultativement, sécher les graines revêtues desdites particules. Une opération de pelliculage (e) peut être effectuée ensuite, si désiré.

Utilisation par des producteurs de graines, par exemple de maïs.

**EP 0 494 802 A1**

L'invention concerne des graines revêtues de préparations déshydratées de microorganismes et leur procédé d'obtention.

Il est connu que certains microorganismes peuvent exercer un effet bénéfique sur la croissance de plantes cultivées. Toutefois, la simple inoculation du sol par de tels microorganismes ne procure pas toujours les effets attendus désirés. Aussi, on a proposé ces dernières années divers agents d'inoculation constitués de microorganismes encapsulés ou inclus dans une matière dégradable dans le sol. La matière d'encapsulation est censée protéger les microorganismes des agressions extérieures pendant le stockage de la formulation et, après application de l'agent d'inoculation au sol à traiter, libérer les microorganismes au fur et à mesure qu'elle se dégrade dans le sol.

Un exemple d'agent d'inoculation de ce genre est décrit dans un article de Jacques Fages (un des co-inventeurs de la présente demande de brevet) paru dans Applied Microbiology and Biotechnology (1990), N° 32, pages 473-478. Cet agent est constitué de cellules vivantes d'Azospirillum lipoferum incluses dans des billes d'alginate de calcium séchées à l'air. L'article mentionne que l'agent d'inoculation peut être répandu dans les sillons des champs et indique aussi qu'il pourrait être testé sous forme de revêtement sur des graines, cette façon de faire étant probablement la manière la plus efficace d'utiliser un agent d'inoculation. Aucune indication pratique relative à la préparation de graines revêtues de l'agent d'inoculation à base d'alginate n'est toutefois donnée.

Par ailleurs, FR-A-2 600 673 décrit un procédé perfectionné de microencapsulation de microorganismes dans une matrice (par exemple sous forme de billes) de polysaccharide (par exemple un alginate) au moins partiellement polymérisée à l'aide d'un sel métallique (par exemple un sel de calcium).

Il serait donc utile de disposer d'un procédé industriel permettant d'enrober des graines avec des particules de polysaccharides incluant des microorganismes, telles que décrites dans les documents précités, de façon à obtenir des graines revêtues desdites particules (appelées ci-après graines bactérisées).

Cependant, la mise au point d'un tel procédé est un problème difficile en raison des multiples conditions à satisfaire. Il faut, en effet, que :

   – la viabilité des microorganismes ne soit pas affectée dans une mesure importante ;

   – la qualité de l'adhésion des particules sur les graines soit bonne de façon que les particules ne se détachent pas dans une mesure importante lors du stockage ou des manipulations des graines ;

   – les moyens adhésifs utilisés pour faire adhérer les particules sur les graines soient très solubles dans l'eau de façon à permettre une mise en contact aisé des particules, et donc des microorganismes, avec l'humidité du sol, une fois les graines semées,

   – le procédé mis en oeuvre ne provoque pas une hydratation excessive des graines,

   – le procédé mis en oeuvre ne modifie pas le pouvoir germinatif des graines,

   – le procédé soit aisé à mettre en oeuvre à l'échelle industrielle et à un coût raisonnable.

Ce problème est encore rendu plus ardu par le fait que les graines à enrober sont souvent prétraitées par un pesticide et qu'il faut donc veiller à ce que ce dernier n'affecte pas la viabilité des microorganismes de l'enrobage.

La présente invention a pour objet de fournir un procédé d'enrobage de graines de plantes cultivées avec des particules de polysaccharides incluant des microorganismes (appelé ci-après procédé de bactérisation) répondant aux critères sus-énoncés.

plus particulièrement l'invention concerne un procédé de bactérisation de graines d'une plante cultivée, caractérisé en ce qu'il comprend les étapes consistant à :

   a) appliquer sur les graines une solution aqueuse d'un adhésif ;

   b) appliquer des particules (i) d'un polysaccharide au moins partiellement polymérisé contenant des cellules déshydratées d'un microorganisme ayant un effet bénéfique sur la croissance de la plante cultivée sur les graines revêtues d'adhésif ;

   c) appliquer des particules (ii) d'une charge inerte sur les graines revêtues des particules (i) ;

   d) facultativement, sécher les graines revêtues desdites particules.

Facultativement, on procède après l'étape (c) ou après l'étape facultative (d), aux étapes supplémentaires (e) et (f) suivantes :

   e) appliquer une pellicule adhérente, perméable à l'eau et à l'air, d'une matière filmogène, soluble dans l'eau, non toxique pour le microorganisme, sur les graines revêtues de particules (i) et (ii), éventuellement séchées ; et

   f) facultativement sécher les graines revêtues et pelliculées obtenues en e).

Avantageusement, on procède à l'étape de séchage (d) lorsqu'on désire effectuer une étape de pelliculage (e).

Egalement facultativement, de l'adhésif supplémentaire peut être appliqué après l'étape (b) ou (c) sur les graines revêtues de particules (i) et/ou (i) + (ii).

L'invention concerne aussi des graines bactérisées d'une plante cultivée caractérisées en ce qu'elles portent un enrobage de particules de (i) un polysaccharide au moins partiellement polymérisé contenant des cellules déshydratées d'un microorganisme ayant un effet bénéfique sur la croissance de la plante cultivée et de particules (ii) d'une charge organique ou minérale, ledit enrobage étant lié aux graines par un adhésif, ledit enrobage étant facultativement revêtu d'une pellicule d'un polymère filmogène, perméable à l'eau et à l'oxygène, soluble dans l'eau, non toxique pour le microorganisme.

L'adhésif appliqué sur les graines dans l'étape (a) peut être choisi, par exemple, dans la classe des polysaccharides extraits de plantes ou produits par des microorganismes. Des exemples de tels produits disponibles dans le commerce sont, des amidons modifiés, tels que l'Actisize(R) 080 ( vendu par la Société Roquette, Lille, France ) gui est un acétate d'amidon, le Dexylose(R) 222 (vendu aussi par la Société Roquette) qui est un amidon de maïs modifié soluble dans l'eau froide, et le Tackidex(R) J055K ( vendu aussi par la Société Roquette ) qui est une dextrine jaune de moyenne viscosité dérivée d'amidon de maïs, la gomme ghatti qui est un polysaccharide extrait de la plante Anogeissus latifolia, et un pullulane tels que les pullulanes PF-10 et PF-20 (vendus par la Société Hayashibara Co. Ltd., Okayama, Japon ) qui sont des polysaccharides solubles dans l'eau d'une masse molaire de 100 000 et 200 000 environ, respectivement, obtenus à partir d'une source d'amidon par fermentation en présence du microorganisme Aureobasidium pullulane. On préfère particulièrement employer un acétate d'amidon tel que l'Actisize(R) 080 ou un pullulane tel que les pullulanes PF-10 ou PF-20 du point de vue de leur pouvoir adhésif et de leur facilité d'application sur les graines, sous forme de solutions aqueuses. Les pullulanes PF-10 et pF-20 présentent, en outre, l'avantage d'avoir des propriétés filmogènes.

La concentration en matière sèche de la solution adhésive peut varier largement en fonction de la viscosité de l'adhésif et de son pouvoir adhésif. Habituellement des solutions à 10 à 40% de matière sèche se sont révélées utiles. On préfère, toutefois, des solutions à 10 à 20% de matière sèche dans le cas des additifs préférés sus-mentionnés.

La quantité de solution adhésive appliquée aux graines est un paramètre important. La quantité de solution adhésive doit être suffisante pour assurer une adhérence convenable des particules de polysaccharide sur les graines mais ne pas être excessive afin de minimiser la quantité d'eau apportée aux graines par la solution adhésive. Des quantités de solution adhésive correspondant à 2g à 20g d'adhésif sec par kg de graines se sont révélées utiles. On préfère habituellement utiliser des quantités de solution adhésive correspondant à 6 à 12g d'adhésif sec par kg de graines, notamment dans le cas des adhésifs préférés. La gamme de proportions préférées dépend, toutefois, dans une certaine mesure, de la nature des graines à traiter.

L'application de la solution adhésive peut s'effectuer très simplement, en l'espace de quelques minutes, par pulvérisation de la solution sur les graines sous agitation.

Les particules (i) appliquées dans l'étape (b) sont formées d'un polysaccharide au moins partiellement polymérisé contenant des cellules déshydratées d'un microorganisme exerçant un effet bénéfique sur la croissance de la plante cultivée. Les particules (ii) appliquées dans l'étape (c) sont formées d'une charge inerte. L'application de ces particules peut être effectuée par addition de chacun des types de particules aux graines revêtues d'adhésif sous agitation et maintien de l'agitation pendant quelques minutes.

Les particules (i) peuvent être obtenues par broyage d'un gel séché d'un polysaccharide au moins partiellement polymérisé contenant des cellules d'un microorganisme désiré. Un tel gel peut être préparé comme décrit dans l'article sus-mentionné de Applied Microbiology and Biotechnology et dans FR-A-2 600 673 dont les enseignements sont incorporés ici par référence si ce n'est qu'il n'est nul besoin que ce gel se présente sous la forme de billes. On préfère tout particulièrement utiliser des particules à base d'un gel d'alginate séché. Le microorganisme inclus dans les particules peut être, par exemple, du genre Azospirillum, Enterobacter, Rhizobium, pseudomonas, Xanthomonas, Bradyrhizobium, etc...

La charge (ii) peut être une charge organique ou minérale. A titre indicatif, on peut citer comme charges utilisables, la cellulose microcristalline (comme le produit Elcema(R), vendu par Degussa, R.F.A.), des rafles de maïs broyées, le mica, le talc, le kaolin, etc...

Les particules (i) et la charge (ii) doivent être finement divisées pour obtenir un enrobage homogène. Par exemple les particules (i) peuvent avoir une grosseur de particules inférieure à 250 μm, de préférence comprise dans la gamme de 50 à 100 μm environ. Des particules (i) de plus de 250 μm sont trop grossières pour l'enrobage tandis que des particules de moins de 50 μm se sont révélées défavorables du point de vue de la viabilité des microorganismes. De leur côté, les particules de charge (ii) peuvent présenter une granulométrie de 1 à 200 μm, de préférence de 1-50 μm. Avantageusement, les particules de charge (ii) présentent une granulométrie plus fine que celle des particules (i).

La présence de la charge (ii) permet de renforcer la solidité de l'adhésion des particules (i) sur les graines, en venant remplir les vides existant être les particules (i).

La quantité de particules (i) appliquée peut aller, à titre d'exemple, de 4 à 50g environ/kg de graines, de préférence de 10 à 20g environ/kg, tandis que celle des particules de charge (ii) peut aller, par exemple, de 3 à 25g/kg de graines, de préférence de 7 à 10g/kg de graines.

Après application des particules (i) et (ii), les graines revêtues sont facultativement séchées de façon à réduire la quantité d'eau apportée par la solution adhésive. L'opération de séchage (d) est particulièrement recommandée si on désire procéder à l'opération de pelliculage (e), car elle facilite cette dernière. Ce séchage peut se faire par chauffage à une température modérée, par exemple de 20 à 40°C, de préférence à 30°C environ, pendant quelques minutes à quelques heures, de manière que le gain en humidité des graines, résultant de la mise en oeuvre du procédé de l'invention n'excède pas 3% en poids environ, de préférence 2% en poids environ.

Après l'étape (c) ou l'étape facultative (d), on peut appliquer, si désiré, sur les graines enrobées par les particules (i) et (ii), une pellicule adhérente, perméable à l'air, d'une matière filmogène, soluble dans l'eau et non toxique pour le microorganisme dans le but d'améliorer l'adhérence de l'enveloppe de particules sur les graines.

L'opportunité de procéder ou non au pelliculage (e) est fonction de l'adhésif appliqué dans l'étape (a). Avec des adhésifs à fort pouvoir adhésif tels que les pullulanes, l'opération de pelliculage (e) n'est habituellement pas indispensable. Par contre, avec des adhésifs à moindre pouvoir adhésif tels que les adhésifs autres que les pullulanes, l'opération de pelliculage (e) est fortement recommandée si l'on veut minimiser les pertes de matières d'enrobage au cours de la manipulation et du stockage des graines. La pellicule appliquée doit bien adhérer aux graines enrobées et être perméable à l'eau et à l'air pour permettre l'hydratation des graines une fois celles-ci semées et pour permettre les échanges gazeux pendant leur stockage. La matière filmogène constituant la pellicule doit être soluble dans l'eau pour que la pellicule puisse être appliquée à partir d'une solution aqueuse et pour pouvoir se dissoudre facilement sous l'effet de l'humidité du sol, une fois les graines semées, et elle doit être, bien évidemment, non toxique pour les microorganismes.

La Demanderesse a trouvé qu'un mélange de polyvinylpyrrolidone (PVP) et d'hydroxypropylméthylcellulose (HPMC) en des proportions d'environ 3:1 à 1:3, de préférence 6:4 à 4:6 environ, constituait une matière de pelliculage satisfaisante. Ce mélange de PVP et de HPMC présente en effet l'ensemble des propriétés adhésives et filmogènes désirées.

Le mélange de PVP et de HPMC peut être appliqué sous forme d'une solution aqueuse à 5 à 15% de matière sèche, de préférence d'environ 7 à 9% de matière sèche. A titre indicatif, la quantité totale de PVP + HPMC appliqué peut aller de 1 à 3g par kg de graines, et est de préférence d'environ 1,5 à 2,5g par kg de graines.

Il est à noter que la HPMC pourrait être remplacée par un autre dérivé de la cellulose, tel que, par exemple, la méthylcellulose.

La pellicule appliquée a pour effet, outre d'améliorer l'adhérence de l'enveloppe de particules sur les graines, de lisser la surface extérieure des graines traitées résultantes. La mise en oeuvre d'une étape de pelliculage s'est révélée particulièrement utile dans le cas de la bactérisation de graines de maïs.

Il est à noter que la composition utilisée pour le pelliculage (e) peut contenir divers ingrédients supplémentaires, tels que des colorants ou autres additifs visant à améliorer l'aspect des graines bactérisées. La Demanderesse a également trouvé qu'il était possible et avantageux d'incorporer un pesticide à la composition de pelliculage plutôt que de prétraiter les graines avec un tel pesticide avant de mettre en oeuvre le procédé de l'invention, ce qui permet d'omettre l'étape de prétraitement. Le pesticide utilisé consiste généralement en un fongicide associé ou non à un corvifuge (agent repoussant les corbeaux). Un exemple de tel pesticide est le produit du commerce dénommé Cormaison[R] FI (vendu par la Société la Quinoléine, France).

Après le pelliculage de l'étape (e), les graines enrobées et pelliculées peuvent être séchées pour réduire leur teneur en eau, notamment dans le cas où on n'a pas effectué de séchage intermédiaire (d). Ce séchage peut être effectué par chauffage à température modérée, par exemple de 20 à 40°C, de préférence à 30°C environ, par exemple dans un sécheur ventilé, pendant quelques heures de manière que le gain en humidité des graines, résultant de la mise en oeuvre du procédé de l'invention n'excède pas 3% en poids environ, de préférence 2% en poids environ.

Le procédé de l'invention est applicable à une grande variété de graines, telles que les graines de maïs, de tournesol, de soja, de colza, de pois, de sorgho et de blé pour n'en citer que quelques unes.

L'invention va être maintenant illustrée par les exemples non limitatifs suivants.

Dans ces exemples, on a utilisé, comme particules du constituant (i), des particules obtenues par broyage mécanique à la plage granulométrique désirée d'un gel d'alginate de calcium incluant des cellules d'Azospirillum lipoferum ou de Bradyrhizobium japonicum obtenu selon le mode opératoire général décrit dans l'article d'Applied Microbiology and Biotechnology précité, du lait écrémé à 20g/l étant utilisé comme adjuvants tant dans le milieu de microencapsulation que dans la solution aqueuse de rinçage avec la différence, toutefois, que le gel était obtenu sous la forme d'une masse agglomérée plutôt que sous la forme de billes discrètes, par suite de l'utilisation de buses de diamètre plus gros que celui préconisé dans ledit article. Les particules résultantes présentent une quantité de cellules viables de l'ordre de $10^9$ à $10^{10}$ UFC/g selon leur taille. UFC signifie " unités formatrices de colonies ".

EXEMPLES 1 à 7

On a bactérisé des lots de graines de maïs prétraitées par du Cormaison[R] FI (pesticide) (1000g par lot, soit environ 4000 graines) selon le mode opératoire général suivant :
– agitation des graines placées dans un tambour cylindrique incliné à 45° tournant à 60 tours/minute ;
– pulvérisation de la solution adhésive sur les graines agitées (durée : 2 minutes) ;
– ajout de 20 g de particules (50-200 µm) à base d'alginate de calcium par kg de graines (environ 5 mg-/graine), sous agitation (durée : 2 minutes) ;
– ajout de 8g de particules (1-50 µm) cellulose microcristalline comme charge par kg de graines (environ 2mg/graine ), sous agitation (durée : 2 minutes) ;
– séchage des graines enrobées résultantes pendant 30 minutes dans une étuve ventilée à 30°C.

Le tableau 1 ci-après indique les types d'ingrédients utilisés et les quantités appliquées ainsi que les résultats d'un essai d'adhérence de l'enrobage effectué consistant à agiter les graines enrobées pendant 15 minutes dans le tambour incliné à 45° tournant à 10 tours/minute et à déterminer le pourcentage de produits d'enrobage s'étant détaché des graines après cette agitation.

## TABLEAU 1

| Ex. | Adhésif appliqué | Concentration de la solution aqueuse d'adhésif % en poids | Quantité d'adhésif (matière sèche) appliquée g/kg de graines | Quantité d'eau apportée par la solution adhé-sive % par graine | Perte de produits d'enrobage après agi-tation des graines, % en poids |
|---|---|---|---|---|---|
| 1 | Tackidex J055K | 20 | 8 | 3,1 | 56 |
| 2 | Tackidex J055K | 30 | 8 | 1,8 | 55 |
| 3 | Tackidex J055K | 40 | 8 | 1,2 | 51 |
| 4 | Actisize 080 | 15 | 8 | 3,7 | 45 |
| 5 | Actisize 080 | 15 | 12 | 5,5 | 21 |
| 6 | Pullulane PF-10 | 20 | 8 | 3,1 | 16 |
| 7 | Gomme ghatti stérilisée | 20 | 8 | 3,1 | non testé |

EP 0 494 802 A1

On voit d'après les résultats du Tableau 1 que les meilleurs résultats quant à l'adhérence de l'enrobage sur les graines sont obtenus avec le Pullulane PF-10 à 8g/kg et avec l'Actisize 080 à 12g/kg. Bien que l'Actisize 080 donne des résultats un peu moins bons que le Pullulane PF-10 et nécessite d'être employé en des quantités supérieures pour donner une adhérence de l'enrobage satisfaisante, il présente l'avantage d'être moins coûteux.

Des mesures de viabilité des graines bactérisées ont montré qu'elles présentent une quantité de cellules viables de l'ordre de $10^7$ UFC/graine juste après la bactérisation et que cette quantité était stable en stockage.

EXEMPLES 8 et 9

Les graines bactérisées obtenues dans les exemples 5 et 6 ont été soumises à un pelliculage consistant à leur appliquer, sous agitation (60 tours/minute), une solution aqueuse à 8% en poids d'un mélange 50 : 50 de polyvinylpyrrolidone d'une masse molaire de 10000 et d'hydroxypropylméthylcellulose de basse viscosité. La durée de l'opération de pelliculage était de 2 minutes et la quantité de matières solides appliquées était de 2g/kg de graines, soit environ 0,5 mg/graine. Après pelliculage, les graines ont été séchées pendant 30 minutes dans une étuve ventilée à 30°C, sous forme d'une couche d'environ 2 cm d'épaisseur.

Les graines bactérisées et pelliculées résultantes ont été soumises au même essai d'adhérence par agitation que décrit à propos des exemples 1-7. Dans les deux cas la perte de produits d'enrobage a été réduite à 5% en poids environ, ce qui montre bien l'intérêt de l'opération de pelliculage.

EXEMPLES 10 à 12

On a répété les exemples 5 et 6 mais en remplaçant la charge de cellulose par des charges de mica (granulométrie : 5% de 80-160 µm, 15% de 45-80 µm et 80% ≦ 45 µm) ou de rafle de maïs (granulométrie : 50-180 µm) en mêmes quantités (8g/kg soit 2mg/graine environ).

Les résultats de l'essai d'adhérence sont résumés dans le Tableau 2.

## TABLEAU 2

| Ex. | Adhésif quantité (g/kg) | charge | Perte de produits d'enrobage après agitation des graines, % en poids |
|---|---|---|---|
| 10 | Pullulane PF-10 8g/kg | mica | 12 |
| 11 | Pullulane PF-10 8g/kg | rafle de maïs | 8 |
| 12 | Actisize (R) 080 12g/kg | rafle de maïs | 21 |

On voit que les résultats obtenus sont sensiblement indépendants de la nature de la charge. L'emploi de rafle de maïs présente toutefois l'avantage d'être moins coûteux.

EXEMPLE 13

On a bactérisé deux lots de graines de tournesol (environ 15000 graines/kg) en leur appliquant, par le mode opératoire général des exemples 1-7, de l'adhésif pullulane PF-10 (solution aqueuse à 20% en poids), en une quantité de 15g (matière sèche)/kg de graines (soit 1mg/graine), puis des particules (granulométrie 100-200 µm) du gel d'alginate de calcium incluant des cellules d'Azospirillum lipoferum sus-décrit à raison de 49,5g par kg de graines (soit 3,3 mg/graine), puis des particules d'une charge (granulométrie : 1-50 µm) constituée d'un mélange, en % en poids, de 45% de cellulose microcristalline, de 45% de talc et de 10% de mica à raison de 15g de charge par kg de graines (soit 1 mg/graine). Après séchage comme décrit aux exemples 1-7, un lot des graines enrobées a été soumis à un pelliculage, comme décrit aux exemples 8-9, avec application de 7,5g/kg de graines du mélange 50 : 50 de HPMC et de PVP (soit 0,5 mg/graine). L'autre lot n'a pas été pelliculé.

7

On a évalué les deux lots dans l'essai d'adhérence décrit aux exemples 1-7, le lot pelliculé a subi une perte de poids de 0,2%, tandis que le lot non pelliculé a subi une perte de poids de 3,5%.

## EXEMPLE 14

On a bactérisé des graines de pois (environ 5000 graines par kg) en leur appliquant, par le seul mode opératoire général des exemples 1-7, de l'adhésif pullulane PF-10 (solution aqueuse à 20% en poids) en une quantité de 7,5g (matière sèche) par kg de graines (soit 1,5 mg/graine), puis des particules (granulométrie 100-200 $\mu$m) du gel d'alginate de calcium incluant des cellules d'Azospirillum lipoferum sus-décrit à raison de 15g par kg de graines (soit 3 mg/graine), puis des particules d'une charge mixte semblable à celle de l'exemple 13 à raison de 10g/kg de graines (soit 2 mg/graine). Enfin, on a séché les graines comme décrit aux exemples 1-7. On n'a pas procédé à un pelliculage. On a évalué les graines de pois enrobées dans l'essai d'adhérence décrit aux exemples 1-7. Elles ont présenté une perte de poids de 0,5%. On a également déterminé le pourcentage de viabilité des bactéries sur la graine et celui-ci était égal à 100%.

## EXEMPLE 15

On a bactérisé des graines de soja (environ 5500 graines par kg ) en leur appliquant, par le mode opératoire général des exemples 1-7, de l'adhésif pullulane PF-10 (en solution aqueuse à 20% en poids ) en une quantité de 5,5g (matière sèche)/kg de graines (soit 1 mg/graine), puis des particules (granulométrie 100-200 $\mu$m ) du gel d'alginate de calcium incluant des cellules de Bradyrhizobium japonicum sus-décrit à raison de 22g par kg de graines (soit 4 mg/graine), puis des particules (1-50 $\mu$m) d'une charge mixte constituée d'un mélange 50 : 50 de cellulose microcristalline et de talc à raison de 11g/kg de graines (soit 2 mg/graine). Enfin, on a séché les graines comme décrit aux exemples 1-7. On n'a pas procédé à un pelliculage.

On a évalué les graines de soja enrobées dans l'essai d'adhérence décrit aux exemples 1-7. Elles ont présenté une perte de poids de 1,7%.

## EXEMPLE 16

On a bactérisé des graines de blé (environ 20000 graines par kg) en leur appliquant, par le mode opératoire général des exemples 1-7, de l'adhésif pullulane PF-10 (en solution aqueuse à 20% en poids ) en une quantité de 8g (matière sèche) par kg de graines (soit 0,4 mg/graine), puis des particules (granulométrie : 50-100 $\mu$m) du gel d'alginate de calcium incluant des cellules d'Azospirillum lipoferum sus-décrit à raison de 27g par kg de graines (soit 1,35 mg/graine), puis des particules d'une charge mixte semblable à celle de l'exemple 13 à raison de 13,5g/kg de graines (soit 0,67 mg/graine). Enfin on a séché les graines comme décrit aux exemples 1-7. On n'a pas effectué de pelliculage.

On a évalué les graines de blé enrobées dans l'essai d'adhérence décrit aux exemples 1-7. Elles ont présenté une perte de poids de 1%. On a égalaient déterminé le pourcentage de viabilité des bactéries sur la graine et celui-ci était égal à 70%.

## EXEMPLE 17

On a bactérisé des graines de colza (environ 170 000 graines par kg) en leur appliquant, par le mode opératoire général des exemples 1-7, de l'adhésif pullulane PF-10 (en solution aqueuse à 16% en poids) en une quantité de 12g (matière sèche) par kg de graines (soit 0,07 mg/graine), puis des particules (granulométrie : 50-100 $\mu$m) du gel d'alginate de calcium incluant des cellules d'Azospirillum lipoferum sus-décrit à raison de 40g par kg de graines (soit 0,24 mg/graine), puis des particules d'une charge mixte semblable à celle de l'exemple 13 à raison de 20 g par kg de graines (soit 0,12 mg/graine). Enfin, on a séché les graines comme décrit aux exemples 1-7. On n'a pas effectué de pelliculage.

On a évalué les graines de colza enrobées dans l'essai d'adhérence décrit aux exemples 1-7. Elles ont présenté une perte de poids de 0,2%. On a également déterminé le pourcentage de viabilité des bactéries sur la graine et celui-ci était égal à 100%.

## EXEMPLE 18

On a bactérisé des graines de sorgho (environ 27 000 graines par kg) en leur appliquant, par le mode opératoire général des exemples 1-7, de l'adhésif pullulane pF-10 (en solution aqueuse à 20% en poids) en une quantité de 13,5g (matière sèche)/kg de graines (soit 0,5 mg/graine), puis des particules (granulométrie : 100-

200 μm) du gel d'alginate de calcium incluant des cellules d'Azospirillum lipoferum sus-décrit à raison de 40,5g par kg de graines (soit 1,5 mg/graine), puis des particules d'une charge mixte semblable à celle de l'exemple 13 à raison de 20,25g par kg de graines (soit 0,75 mg/graine). Enfin, on a séché les graines comme décrit aux exemples 1-7. On n'a pas effectué de pelliculage.

On a évalué les graines de sorgho enrobées dans l'essai d'adhérence décrit aux exemples 1-7. Elles ont présenté une perte de poids de 2%. On a également déterminé le pourcentage de viabilité des bactéries sur la graine et celui-ci était égal à 100%.

EXEMPLE 19

On a bactérisé des graines de maïs (environ 4000 graines par kg ) ayant été prétraitées par du Cormaison[(R)] FI en leur appliquant, par le mode opératoire général des exemples 1-7, de l'adhésif Actisize 080 (en solution aqueuse à 13% en poids) en une quantité de 12g (matière sèche) par kg de graines (soit 3 mg/graine), puis des particules (granulométrie : 100-200 μm) du gel d'alginate de calcium incluant des cellules d'Azospirillum lipoferum sus-décrit à raison de 16 g par kg de graines (soit 4 mg/ graine), puis des particules d'une charge mixte semblable à celle de l'exemple 13 à raison de 8g/kg de graines (soit 2 mg/graine). On a séché les graines comme décrit aux exemple 1-7, puis on les a soumises à un pelliculage, comme décrit aux exemples 8-9, avec application de 1,6g du mélange 50 : 50 de HPMC et de PVP (soit 0,4 mg/graine). On a évalué les graines enrobées et pelliculées dans l'essai d'adhérence décrit aux exemples 1-7 et on a trouvé qu'elle y subissait une perte de poids de 6%.

EXEMPLE 20

On a bactérisé des graines de maïs comme décrit à l'exemple 19 si ce n'est que les graines n'avaient pas été prétraitées au Cormaison[(R)] FI et que l'on a mélangé à la solution de pelliculage du Cormaison[(R)] FI en une quantité telle que 1 mg de Cormaison[(R)] FI soit incorporé dans la pellicule revêtant chaque graine.

L'essai d'adhérence des exemples 1-7 a montré une perte de poids de 1%.

Le pourcentage de viabilité des bactéries sur la graine était de 100%.

EXEMPLE 21

Les graines de maïs bactérisées de l'exemple 9 ont été soumises à des études de viabilité des microorganismes sur une période de 217 jours à des températures de 10 et 20°C, respectivement. A titre comparatif, on a également suivi sur cette période la viabilité de particules de gel d'alginate de calcium incluant des cellules d'Azospirillum lipoferum semblables à celles utilisées pour l'enrobage, à l'état libre, à 20°C.

Le Tableau ci-dessous résume les résultats obtenus qui sont tous exprimés en UFC/graine pour les graines bactérisées et en UFC/gramme pour les particules de gel libres.

| Temps, jour | Température | | Particules de gel libres (témoins) |
|---|---|---|---|
| | 10°C | 20°C | |
| 0 | $5,2 \times 10^7$ | $5,2 \times 10^7$ | $16,4 \times 10^9$ |
| 16 | --- | --- | $14,3 \times 10^9$ |
| 41 | $2,4 \times 10^7$ | $3,8 \times 10^7$ | |
| 113 | $2,25 \times 10^7$ | $2,3 \times 10^7$ | $10,9 \times 10^9$ |
| 217 | $2,1 \times 10^7$ | $1,6 \times 10^7$ | $6,5 \times 10^9$ |

Ces résultats montrent une bonne stabilité de la viabilité des bactéries sur les graines.

Il va de soi que les modes de réalisation décrits ne sont que des exemples et qu'on pourrait les modifier, notamment par substitution d'équivalents techniques, sans sortir pour cela du cadre de l'invention.

**Revendications**

1. Un procédé de bactérisation de graines d'une plante cultivée, caractérisé en ce qu'il comprend les étapes consistant à :
   a) appliquer sur les graines une solution aqueuse d'un adhésif ;
   b) appliquer des particules (i) d'un polysaccharide au moins partiellement polymérisé contenant des cellules déshydratées d'un microorganisme ayant un effet bénéfique sur la croissance de la plante cultivée sur les graines revêtues d'adhésif ;
   c) appliquer des particules (ii) d'une charge inerte sur les graines revêtues des particules (i) ;
   d) facultativement, sécher les graines revêtues desdites particules.

2. Un procédé selon la revendication 1, caractérisé en ce que, après l'étape (c) ou l'étape facultative (d), on procède aux étapes supplémentaires suivantes :
   e) appliquer une pellicule adhérente, perméable à l'eau et à l'air, d'une matière filmogène, soluble dans l'eau, non toxique pour le microorganisme, sur les graines revêtues de particules (i) et (ii), éventuellement séchées ; et
   f) facultativement, sécher les graines revêtues et pelliculées obtenues en e).

3. Un procédé selon la revendication 1 ou 2, caractérisé en ce que l'adhésif est un polysaccharide extrait de plantes ou produit par des microorganismes.

4. Un procédé selon la revendication 3, caractérisé en ce que l'adhésif appliqué est un acétate d'amidon ou un pullulane.

5. Un procédé selon la revendication 1, caractérisé en ce qu'on applique, dans l'étape (a), 2 à 20g d'adhésif sec par kg de graines ; dans l'étape (b), 4 à 50g de particules (i) par kg de graines ; et, dans l'étape (c), 3 à 25g de particules (ii) par kg de graines.

6. Un procédé selon la revendication 5, caractérisé en ce qu'on applique, dans l'étape (a), 6 à 12g d'adhésif sec par kg de graines ; dans l'étape (b), 10 à 20g de particules (i) par kg de graines ; et, dans l'étape (c), 7 à 10g de particules (ii) par kg de graines.

7. Un procédé selon la revendication 2, caractérisé en ce que la matière filmogène appliquée dans l'étape (e) est un mélange de polyvinylpyrrolidone et d'hydroxypropylméthylcellulose.

8. Un procédé selon la revendication 7, caractérisé en ce que la matière filmogène est appliquée sous forme d'une solution aqueuse en une quantité correspondant à 1 à 3g de matière filmogène sèche par kg de graines.

9. Un procédé selon l'une quelconque des revendications 1 à 8, caractérisé en ce que les graines sont des graines de maïs, tournesol, soja, colza, pois, sorgho ou blé.

10. Un procédé selon l'une quelconque des revendications 1 à 9, caractérisé en ce que les particules (i) sont des particules d'alginate de calcium incluant un microorganisme du genre Azospirillum, Enterobacter, Rhizobium, Pseudomonas, Xanthomonas ou Bradyrhizobium.

11. Graines d'une plante cultivée caractérisées en ce qu'elles portent un enrobage de particules de (i) un polysaccharide au moins partiellement polymérisé contenant des cellules déshydratées d'un microorganisme ayant un effet bénéfique sur la croissance de la plante cultivée et de particules (ii) d'une charge organique ou minérale, ledit enrobage étant lié aux graines par un adhésif, ledit enrobage étant facultativement revêtu d'une pellicule d'un polymère filmogène, perméable à l'eau et à l'oxygène, soluble dans l'eau, non toxique pour le microorganisme.

**12.** Graines selon la revendication 11, caractérisées en ce que l'adhésif est un polysaccharide extrait de plantes ou produit par des microorganismes.

**13.** Graines selon la revendication 11, caractériséesen ce que ledit enrobage est revêtu d'une pellicule d'un mélange de polyvinylpyrrolidone et d'hydroxypropylméthylcellulose.

EP 0 494 802 A1

Office européen
des brevets

**RAPPORT DE RECHERCHE EUROPEENNE**

Numero de la demande

EP   92 40 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 469 861 (ANVAR)<br>* page 4, ligne 33 - page 5, ligne 11 *<br>* page 6, ligne 5 - page 8, ligne 29; revendications; exemples *<br>--- | 1-10 | A01N63/00<br>A01C1/06 |
| Y | FR-A-800 927 (G. E. HEYL)<br>* page 4, ligne 19 - page 4, ligne 34; revendications 1-12 *<br>--- | 1-10 | |
| A | EP-A-0 083 267 (RHONE-POULENC S.A.)<br>--- | | |
| D,A | FR-A-2 600 673 (SOCIETE CHIMIQUE DES CHARBONNAGES S.A.)<br>--- | | |
| D,A | APPLIED MICROBIOLOGY & BIOTECHNOLOGY vol. 32, no. 4, Janvier 1990, pages 473 - 478;<br>J. FAGES: 'An optimized process for manufacturing an Azospirillum inoculant for crops'<br>----- | | |

DOMAINES TECHNIQUES RECHERCHES (Int. Cl.5)

A01N
A01C

Le présent rapport a été établi pour toutes les revendications

| Lieu de la recherche | Date d'achèvement de la recherche | Examinateur |
|---|---|---|
| LA HAYE | 09 AVRIL 1992 | DONOVAN T.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)